# EUROPÄISCHE PATENTSCHRIFT

(11) **EP 1 283 343 B1**
(45) Veröffentlichungstag und Bekanntmachung des Hinweises auf die Patenterteilung: **11.04.2007**
(21) Anmeldenummer: 02016003.2
(22) Anmeldetag: 18.07.2002
(51) Int. Cl.: F02D 41/40

(54) **Verfahren, Computerprogramm und Steuer- und/oder Regelgerät zum Betreiben einer Brennkraftmaschine**
Method, computer programme and control and/or regulation device for operating an internal combustion engine
Procédé, programme informatique et dispositif de commande et/ou de réglage du fonctionnement d'un moteur à combustion interne

(30) Priorität: 10.08.2001 DE 10139518
(43) Veröffentlichungstag der Anmeldung: 12.02.2003
(73) Patentinhaber: ROBERT BOSCH GMBH, 70442 Stuttgart (DE)
(72) Erfinder: Roth, Andreas, 75417 Muehlacker-Lomersheim (DE); Kudicke, Bernd, 74336 Brackenheim (DE); Schuster, Thomas, 74336 Brackenheim (DE)

(56) Entgegenhaltungen:
- EP-A- 0 360 528
- EP-A- 0 882 878
- DE-A1- 19 751 887
- DE-A1- 19 851 974

## Beschreibung

### Stand der Technik

Die Erfindung betrifft zunächst ein Verfahren zum Betreiben einer Brennkraftmaschine, bei dem mindestens ein Teil des Kraftstoffs so in mindestens einen Brennraum der Brennkraftmaschine eingespritzt werden kann, dass er dort geschichtet vorliegt ("Schichteinspritzung"), und bei dem für den Betrieb der Brennkraftmaschine erforderliche Operationen in einem zum Drehwinkel einer Kurbelwelle synchronen Verarbeitungsraster bestimmt werden.

Ein solches Verfahren ist aus der DE 198 51 974 A1 bekannt. In dieser ist ein Verfahren zur Steuerung von Betriebsabläufen in einem Fahrzeug offenbart. Die Brennkraftmaschine des Fahrzeugs kann dabei in unterschiedlichen Betriebsarten betrieben werden: Zum einen ist eine Betriebsart mit Ladungsschichtung bei Teillast und im Leerlauf sowie eine Betriebsart mit homogenem Gemisch bei Volllast möglich. Die in einem Steuergerät für die jeweilige Betriebsart erforderlichen Vorgänge, wie bspw. die Berechnung von Betriebsgrößen, laufen in einem Verarbeitungsraster ab. Bei diesem kann es sich um ein Zeitraster handeln oder um ein an die Drehzahl der Kurbelwelle gekoppeltes Verarbeitungsraster. Das Verarbeitungsraster wiederholt sich periodisch, und die entsprechenden Operationen werden an bestimmten Stellen innerhalb des Verarbeitungsrasters durchgeführt.

Bei der Anwendung des bekannten Verfahrens hat sich herausgestellt, dass die Drehzahlkonstanz im Leerlauf sowie im Schichtbetrieb einer verfahrensgemäß betriebenen Brennkraftmaschine noch verbessert werden kann. Die vorliegende Erfindung hat die Aufgabe, ein Verfahren der eingangs genannten Art so weiterzubilden, dass dieses Ziel erreicht wird.

Diese Aufgabe wird bei einem Verfahren der eingangs genannten Art dadurch gelöst, dass die Kraftstoffmenge der Schichteinspritzung am Anfang eines eigenen, zweiten, zum Drehwinkel der Kurbelwelle synchronen Verarbeitungsraster bestimmt wird.

### Vorteile der Erfindung

Bei dem erfindungsgemäßen Verfahren ist es möglich, die Kraftstoffmenge, die bei einer Schichteinspritzung in den Brennraum der Brennkraftmaschine gelangen soll, zeitnah zur Durchführung dieser Schichteinspritzung zu bestimmen. Bei der Bestimmung der Kraftstoffmenge können somit die jeweils aktuellen Betriebsgrößen verwendet werden, so dass die Kraftstoffmenge der Schichteinspritzung dem zum Zeitpunkt der Einspritzung vorhandenen Betriebszustand der Brennkraftmaschine optimal entsprechen kann. Hierdurch wird eine konstantere Drehzahl im Leerlauf ermöglicht.

Dem liegt folgender Gedanke zugrunde: Es wurde festgestellt, dass bei dem bekannten Verfahren die Betriebsgrößen, welche für die Bestimmung der Kraftstoffmenge der Schichteinspritzung verwendet werden, relativ weit vor dem Zeitpunkt der Schichteinspritzung liegen. Dies hängt damit zusammen, dass die Berechnung der Kraftstoffmenge der Schichteinspritzung möglichst zu Beginn eines Verarbeitungsrasters erfolgen soll. Aus bautechnischen Gründen liegt der Beginn eines Verarbeitungsrasters jedoch genau in jenem Zeitbereich, zu dem die Schichteinspritzung erfolgen soll. Somit muss für eine Schichteinspritzung jene Kraftstoffmenge verwendet werden, die bei einer vorhergehenden Periode des Verarbeitungsrasters berechnet worden war.

Dieser Mangel wird durch die erfindungsgemäße Maßnahme behoben: Hier wird speziell für die Berechnung der Kraftstoffmenge der Schichteinspritzung ein eigenes Verarbeitungsraster geschaffen. Der Beginn der Periode dieses Verarbeitungsrasters kann nun so gelegt werden, dass die Berechnung der Kraftstoffmenge für die Schichteinspritzung nicht während einer Schichteinspritzung, sondern kurz vor einer Schichteinspritzung erfolgt. Der Beginn einer Periode des zweiten Verarbeitungsrasters liegt also in einem festen Abstand ("offset") vom Beginn der Periode des ersten Verarbeitungsrasters.

Vorteilhafte Weiterbildungen der Erfindung sind in Unteransprüchen angegeben.

In einer ersten besonders bevorzugten Weiterbildung des erfindungsgemäßen Verfahrens wird vorgeschlagen, dass mindestens ein erstes Verarbeitungsraster im Bereich eines Drehwinkels der Kurbelwelle von 67° bis 77° vZOT, vorzugsweise bei ungefähr 72° vZOT beginnt, und dass das zweite Verarbeitungsraster, in dem die Kraftstoffmenge der Schichteinspritzung bestimmt wird, im Bereich eines Drehwinkels der Kurbelwelle von 127° bis 137° vZOT, vorzugsweise bei ungefähr 132° vZOT beginnt.

Der Beginn des ersten Verarbeitungsrasters wird üblicherweise durch ein an der Kurbelwelle der Brennkraftmaschine befestigtes Zahnrad festgelegt. Dieses Zahnrad weist eine Zahnlücke auf, deren Vorbeistreichen an einem Sensor den Beginn des ersten Verarbeitungsrasters definiert. Dabei sei darauf hingewiesen, dass bei mehrzylindrigen Brennkraftmaschinen jeder Zylinder ein eigenes Verarbeitungsraster aufweist. Bei einer vierzylindrigen Brennkraftmaschine liegen diese Verarbeitungsraster dann 180° auseinander.

Die Lage der Zahnlücke im Zahnrad wird dabei möglichst so gewählt, dass die Geschwindigkeit des Zahnrades dann, wenn die Zahnlücke am Sensor vorbeistreicht, möglichst groß ist. Dies ist in dem erfindungsgemäß angegebenen Bereich der Fall. Die Lage des zweiten Verarbeitungsrasters gegenüber dem oberen Totpunkt Zündung (ZOT) ist so gewählt, dass in jedem Falle sichergestellt ist, dass die Berechnung der Kraftstoffmenge der Schichteinspritzung vor der eigentlichen Schichteinspritzung erfolgt.

Bevorzugt wird weiterhin, wenn ein momentaner Drehzahlwert unmittelbar vor Beginn des zweiten Verarbeitungsrasters ermittelt und für die Bestimmung der Kraftstoffmenge der Schichteinspritzung verwendet wird. Insbesondere für die Unterdrückung von Drehzahlschwankungen durch zu den Drehzahlschwankungen gegenphasige Drehmomenterhöhungen ist es wichtig, dass die drehmomentbestimmende Kraftstoffeinspritzung und die Messung der Drehzahl, aus der die Kraftstoffmenge wiederum hergeleitet wird, möglichst nah beieinander liegen. Dem wird durch die erfindungsgemäße Weiterbildung Rechnung getragen.

Dabei wird besonders bevorzugt, wenn eine mittlere Drehzahl ermittelt wird, welche während eines Zeitraums einer halben Kurbelwellenumdrehung vor Beginn des zweiten Verarbeitungsrasters geherrscht hat, dass die Differenz zwischen dem momentanen Drehzahlwert und der mittleren Drehzahl gebildet wird, dass diese Differenz einem Filter oder einer Kennlinie zugeführt wird, dass der hieraus hervorgehende Wert zu dem momentanen Drehzahlwert addiert wird, und dass die hieraus hervorgehende bereinigte Momentandrehzahl zur Bestimmung der Kraftstoffmenge der Schichteinspritzung verwendet wird.

Durch diese besonders bevorzugte Weiterbildung des erfindungsgemäßen Verfahrens kann der Tatsache Rechnung getragen werden, dass innerhalb einer Umdrehung der Kurbelwelle Drehungleichförmigkeiten aufgrund der diskontinuierlichen Verbrennung in den Zylindern auftreten können. Ein unmittelbar vor Beginn des zweiten Verarbeitungsrasters ermittelter momentaner und "mikroskopischer" Drehzahlwert kann also von dem für die Kraftstoffeinspritzung an sich relevanten "makroskopischen" Drehzahlwert abweichen. Diese Abweichung wird bei dem oben beschriebenen erfindungsgemäßen Verfahren eliminiert. Die einzuspritzende Kraftstoffmenge kann somit noch präziser bestimmt werden.

In einer nochmaligen besonders vorteilhaften Weiterbildung des erfindungsgemäßen Verfahrens wird vorgeschlagen, dass die bereinigte Momentandrehzahl mit einer zuvor ermittelten Momentandrehzahl verglichen und hieraus im zweiten Verarbeitungsraster die Kraftstoffmenge der Schichteinspritzung so bestimmt wird, dass Schwankungen der Momentandrehzahl unterdrückt werden. Die zu Drehzahlschwankungen gegenphasige Drehmomenterzeugung ist bei diesem Verfahren mit hoher Präzision möglich, was eine sehr konstante Leerlaufdrehzahl zur Folge hat.

Vorgeschlagen wird auch, dass die Luftmenge, welche bei der Bestimmung der Kraftstoffmenge der Schichteinspritzung berücksichtigt wird, im zweiten Verarbeitungsraster, vorzugsweise unmittelbar vor der Berechnung der Kraftstoffmenge der Schichteinspritzung, bestimmt wird. Hierdurch wird auch der Zeitraum zwischen der Berechnung der Kraftstoffmenge der Schichteinspritzung und der hierfür erforderlichen Luftmenge reduziert, was die Präzision bei der Berechnung der Kraftstoffmenge erhöht.

Bevorzugt wird auch, dass mindestens ein Teil des Kraftstoffs so in einen Brennraum der Brennkraftmaschine eingespritzt wird, dass er dort im Wesentlichen homogen vorliegt ("Homogeneinspritzung"), und die Kraftstoffmenge der Homogeneinspritzung am Anfang des ersten Verarbeitungsrasters bestimmt wird. Dies hat den Vorteil, dass das zweite Verarbeitungsraster von Berechnungsvorgängen entlastet wird, so dass die drehmomentbestimmende Schichteinspritzung tatsächlich zum optimalen Zeitpunkt berechnet werden kann.

Dieser Vorteil wird auch bei jener Weiterbildung des erfindungsgemäßen Verfahrens erzielt, bei welcher der Zeitpunkt der Zündung im ersten Verarbeitungsraster bestimmt wird.

Die Erfindung betrifft auch ein Computerprogramm, welches das obige Verfahren durchführt, wenn es auf einem Computer ausgeführt wird. Dabei wird besonders bevorzugt, wenn das Computerprogramm auf einem Speicher, insbesondere auf einem Flash-Memory, abgespeichert ist.

Weiterhin betrifft die Erfindung ein Steuer- und/oder Regelgerät zum Betreiben einer Brennkraftmaschine wobei das Steuer- und/oder Regelgerät einen Speicher umfasst, auf dem ein Computerprogramm der obigen Art abgespeichert ist. Die Leerlaufgüte der Brennkraftmaschine kann durch die Ausführung des Computerprogramms verbessert werden.

Zeichnung

Nachfolgend werden besonders bevorzugte Ausführungsbeispiele der Erfindung unter Bezugnahme auf die beiliegende Zeichnung im Detail erläutert. In der Zeichnung zeigen:
- Figur 1: eine Prinzipdarstellung einer Brennkraftmaschine;
- Figur 2: ein Diagramm, in dem ein erstes Verarbeitungsraster und ein zweites Verarbeitungsraster und die in den jeweiligen Verarbeitungsrastern ausgeführten Operationen über dem Drehwinkel einer Kurbelwelle der Brennkraftmaschine von Fig. 1 aufgetragen sind, wobei sich die Brennkraftmaschine in einer ersten Betriebsart befindet;
- Figur 3: eine zu Fig. 2 leicht abgewandelte Darstellung der Verarbeitungsraster und der entsprechenden Operationen, wobei sich die Brennkraftmaschine ebenfalls in der ersten Betriebsart befindet;
- Figur 4: eine Darstellung ähnlich wie Fig. 3, wobei sich die Brennkraftmaschine in einer zweiten Betriebsart befindet;
- Figur 5: eine Darstellung ähnlich wie Fig. 3, wobei sich die Brennkraftmaschine in einer dritten Betriebsart befindet;

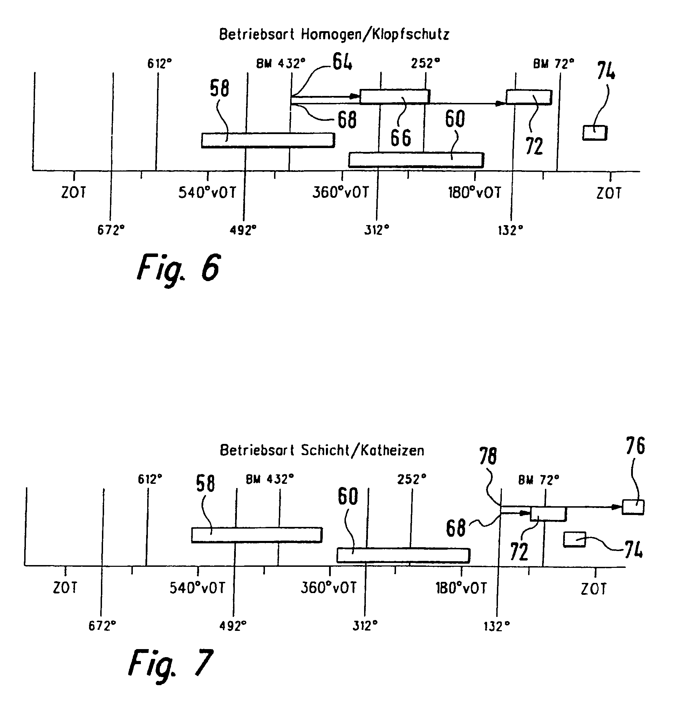

- Figur 6: eine Darstellung ähnlich wie Fig. 3, wobei sich die Brennkraftmaschine in einer vierten Betriebsart befindet;
- Figur 7: eine Darstellung ähnlich wie Fig. 3, wobei sich die Brennkraftmaschine in einer fünften Betriebsart befindet;
- Figur 8: ein Ablaufschema, aus dem die Berechnung einer bereinigten Momentandrehzahl hervorgeht; und
- Figur 9: ein Diagramm, in dem einerseits der Verlauf einer Drehzahl der Brennkraftmaschine von Fig. 1 über der Zeit und andererseits die eingespritzte Kraftstoffmenge über der Zeit dargestellt sind.

### Beschreibung der Ausführungsbeispiele

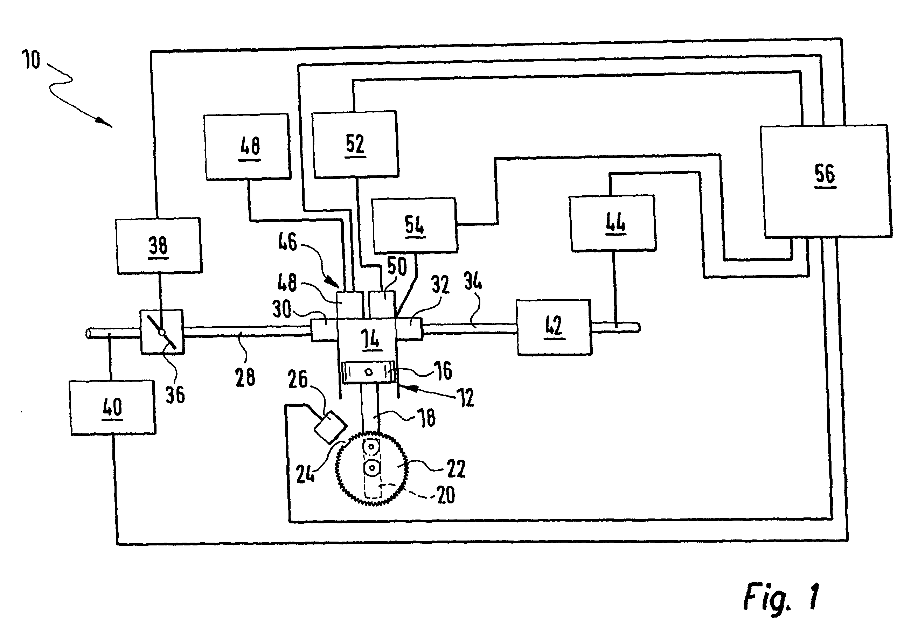

In Fig. 1 trägt eine Brennkraftmaschine insgesamt das Bezugszeichen 10. Sie umfasst einen Motorblock mit mehreren Zylindern, von denen in Fig. 1 nur einer dargestellt ist, welcher das Bezugszeichen 12 trägt. In dem Zylinder 12 ist ein Brennraum 14 vorhanden, welcher bereichsweise von einem Kolben 16 begrenzt wird. Dieser ist über ein Pleuel 18 mit einer Kurbelwelle 20 verbunden.

An der Kurbelwelle 20 ist wiederum ein Zahnrad 22 befestigt. Dieses trägt auf seinem Umfang insgesamt 58 Zähne (ohne Bezugszeichen). Über eine Umfangserstreckung, die zwei Zähnen entspricht, sind keine Zähne vorhanden. Diese Lücke auf dem Umfang des Zahnrads 22 trägt in Fig. 1 das Bezugszeichen 24. Ein induktiver Sensor 26 ist zum Zahnrad 22 benachbart angeordnet und so ausgebildet, dass er bei einer Drehung des Zahnrads 22 das Vorbeistreichen der Lücke 24 erfassen kann.

Dem Brennraum 14 wird Verbrennungsluft durch ein Einlassrohr 28 und ein Einlassventil 30 zugeführt. Die Verbrennungsabgase werden aus dem Brennraum 14 über ein Auslassventil 32 und ein Abgasrohr 34 abgeführt. Eine Drosselklappe 36 ermöglicht die Einstellung der Luftmenge, welche durch das Einlassrohr 28 in den Brennraum 14 gelangt. Die Bewegung der Drosselklappe 36 erfolgt durch einen Stellmotor 38. Die in den Brennraum 14 gelangende Luftmenge wird von einem Heißfilmsensor ("HFM-Sensor") gemessen, welcher das Bezugszeichen 40 trägt. Im Abgasrohr 38 ist ein Katalysator 42 angeordnet, und die Gemischzusammensetzung wird von einer Lambda-Sonde 44 erfasst.

Kraftstoff wird dem Brennraum 14 von einem in Fig. 1 nur symbolisch dargestellten Kraftstoffsystem 46 zugeführt. Ein solches Kraftstoffsystem 46 kann einen Kraftstoffbehälter, eine elektrische Vorförderpumpe und eine mechanische Hauptförderpumpe umfassen. Ferner umfasst das Kraftstoffsystem 46 eine als "Rail" bezeichnet Kraftstoff-Sammelleitung, in welcher der Kraftstoff unter hohem Druck gespeichert ist. An diese ist ein Einspritzventil 48 angeschlossen, welches den Kraftstoff direkt in den Brennraum 14 der Brennkraftmaschine 10 einspritzt. Die Zündung des im Brennraum 14 vorhandenen Luft-Kraftstoff-Gemisches erfolgt durch eine Zündkerze 50, die von einem Zündsystem 52 mit der erforderlichen Energie versorgt wird. Ein am Zylinder 12 der Brennkraftmaschine 10 befestigter Klopfsensor 54 erfasst eine möglicherweise im Brennraum 14 stattfindende klopfende Verbrennung.

Der Betrieb der Brennkraftmaschine 10 wird von einem Steuer- und Regelgerät 56 gesteuert bzw. geregelt. Dieses ist ausgangsseitig mit dem Zündsystem 52, dem Einspritzventil 48, und dem Stellmotor 38 der Drosselklappe 36 verbunden, und eingangsseitig ist das Steuer- und Regelgerät 56 mit dem Klopfsensor 54, dem Lambda-Sensor 44, dem induktiven Sensor 26 und dem HFM-Sensor 40 verbunden.

Wie aus Fig. 1 hervorgeht, wird der Kraftstoff in den Brennraum 14 direkt vom Einspritzventil 48 eingespritzt.

Die Brennkraftmaschine 10 kann in unterschiedlichen Betriebsarten, abhängig bspw. von Drehzahl und Drehmoment, betrieben werden. Möglich ist es bspw., Kraftstoff während des Saugtaktes in den Brennraum 14 einzuspritzen, also während eines Zeitraums, in dem das Einlassventil 30 geöffnet ist. In diesem Fall bildet der Kraftstoff zusammen mit der im Brennraum 14 befindlichen Luft ein im Wesentlichen homogenes Kraftstoff-Luft-Gemisch. Eine solche Einspritzung wird als "Homogeneinspritzung" bezeichnet, die entsprechende Betriebsart als "Homogen".

Möglich ist es aber auch, den Kraftstoff während der Kompressionsphase, wenn also das Einlassventil 30 und das Auslassventil 32 geschlossen sind, kurz vor dem Erreichen des oberen Totpunkts des Kolbens 16 einzuspritzen. Aufgrund der speziellen Ausbildung des Einspritzventils 48 liegt in diesem Falle nur in unmittelbarer Nähe der Zündkerze 50 eine zündfähige Kraftstoffschicht vor, wohingegen im restlichen Brennraum 14 des Zylinders 12 nur wenig oder überhaupt kein Kraftstoff vorhanden ist. Eine solche Einspritzung wird als "Schichteinspritzung" bezeichnet, die entsprechende Betriebsart als "Schicht". Möglich sind auch beliebige Kombinationen der beiden Betriebsarten.

Die in einer Betriebsart notwendigen Operationen, Berechnungen und die Erzeugung entsprechender Steuersignale werden von einem Mikroprozessor im Steuer- und Regelgerät 56 innerhalb eines Verarbeitungsrasters abgearbeitet. Dabei gibt es zeitsynchrone Verarbeitungsraster, bei denen bestimmte Operationen in bestimmten konstanten zeitlichen Abständen erledigt werden. Andere Operationen werden in einem zum Drehwinkel der Kurbelwelle 20 synchronen Verarbeitungsraster durchgeführt.

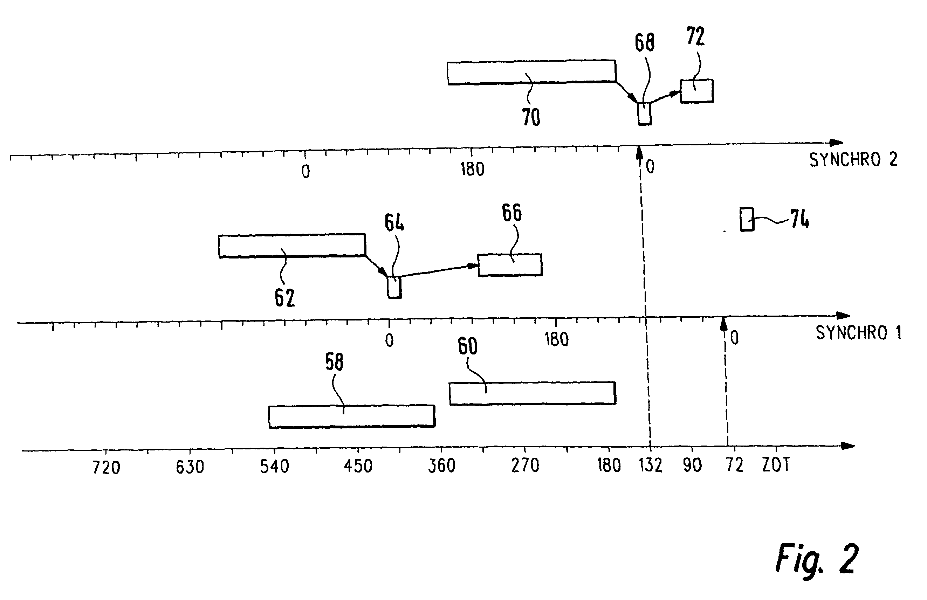

Die aktuelle Winkelposition der Kurbelwelle 20 wird dabei vom induktiven Sensor 26 über die Erfassung der Lücke 24 und der auf diese folgenden Anzahl von Zähnen am Zahnrad 22 erfasst. Anstelle eines induktiven Sensors könnte beispielswiese auch ein Hall-Sensor verwendet werden. Die Winkelposition der Kurbelwelle 20 ist dem Steuer- und Regelgerät 56 somit bekannt. Sie wird in "Grad vor dem oberen Totpunkt Zündung" (vZOT) des Kolbens 16 gemessen und ist in Fig. 2 auf der unteren Abszisse aufgetragen. Das Einlassventil 30 und das Auslassventil 32 sind mechanisch über die Nockenwelle (nicht dargestellt) mit der Kurbelwelle 20 starr verbunden. Der Öffnungszeitraum des Auslassventils 32 trägt in Fig. 2 das Bezugszeichen 58, wohingegen der Öffnungszeitraum des Einlassventils 30 in Fig. 2 mit dem Bezugszeichen 60 bezeichnet ist.

Die Lücke 24 am Zahnrad 22 definiert den Beginn eines ersten, zum Drehwinkel der Kurbelwelle 20 synchronen Verarbeitungsrasters. Dieses ist in Fig. 2 als "SYNCHRO1" bezeichnet und als mittlere Abszisse in Fig. 2 aufgetragen. Aus bau- und messtechnischen Gründen liegt der Beginn dieses ersten Verarbeitungsrasters bei 72° vZOT. In diesem ersten Verarbeitungsraster SYNCHRO1 werden für eine Homogeneinspritzung erforderliche Operationen durchgeführt. Zu den im SYNCHRO1 durchgeführten Operationen gehört die Erfassung der für die Homogeneinspritzung maßgeblichen Luftfüllung (Bezugszeichen 62), die Berechnung der entsprechenden Kraftstoffmenge für die Homogeneinspritzung (Bezugszeichen 64) und die Ansteuerung des Einspritzventils 48 für die Durchführung der Homogeneinspritzung (Bezugszeichen 66).

Für die entsprechenden Operationen einer Schichteinspritzung ist ein eigenes, zweites, ebenfalls zum Drehwinkel der Kurbelwelle 20 synchrones Verarbeitungsraster vorgesehen. Dieses wird als "SYNCHRO2" bezeichnet und ist in Fig. 2 auf der obersten Abszisse aufgetragen. Dieses zweite Verarbeitungsraster SYNCHRO2 beginnt bei 132° vZOT. Unmittelbar nach Beginn des zweiten Verarbeitungsrasters SYNCHRO2 wird die für eine Schichteinspritzung vorgesehene Kraftstoffmenge berechnet (Bezugszeichen 68). Die hierfür maßgebliche Luftfüllung wurde kurz zuvor erfasst (Bezugszeichen 70). Die Ansteuerung des Einspritzventils 48 erfolgt unmittelbar nach der Berechnung 68 der Kraftstoffmenge und ist durch das Bezugszeichen 72 gekennzeichnet. Die Ansteuerung des Zündsystems 52 erfolgt wiederum im ersten Verarbeitungsraster SYNCHRO1. Die Zündung erfolgt dabei unmittelbar nach der Einspritzung 72 für die Schichteinspritzung und trägt das Bezugszeichen 74.

Da die Berechnung der Kraftstoffmenge immer zu Beginn eines Verarbeitungsrasters erfolgt, ist es durch die Einführung des zweiten Verarbeitungsrasters SYNCHRO2 möglich, die für die Schichteinspritzung 72 erforderliche Kraftstoffmenge unmittelbar vor der eigentlichen Einspritzung 62 im Punkt 68 zu berechnen.

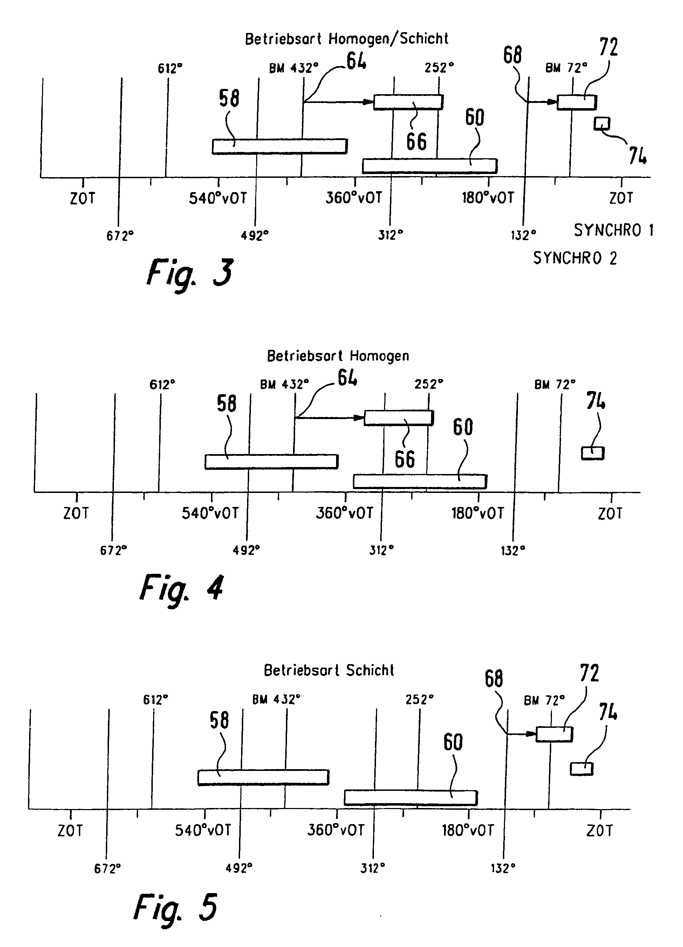

Bei dem in den Fign. 2 und 3 dargestellten Ausführungsbeispiel wird die Brennkraftmaschine 10 in der Betriebsart Homogen/Schicht betrieben. Dies bedeutet, dass während eines Arbeitstaktes zunächst eine Homogeneinspritzung 66 und zusätzlich auch eine Schichteinspritzung 72 durchgeführt wird. Möglich ist aber auch eine Betriebsart "Homogen", in welcher ausschließlich eine Homogeneinspritzung erfolgt. Dies ist in Fig. 4 dargestellt. Auch eine Betriebsart "Schicht", in welcher ausschließlich eine Schichteinspritzung erfolgt, ist möglich. Sie ist in Fig. 5 dargestellt.

Ferner gibt es eine Betriebsart "Homogen/Klopfschutz". Bei dieser erfolgt zunächst eine relativ magere Homogeneinspritzung, durch die Klopfen verhindert wird. Dann wird während der Kompressionsphase eine Einspritzung 72 durchgeführt, um ein Lambda von ungefähr eins zu erreichen. Die Berechnung 68 der Kraftstoffmenge für die Schichteinspritzung 62 erfolgt im ersten Verarbeitungsraster SYNCHRO1 gleichzeitig mit der Berechnung 64 der Kraftstoffmenge für die Homogeneinspritzung 66. Obwohl die zweite Einspritzung 72 während der Kompressionsphase erfolgt, handelt es sich nicht um eine echte Schichteinspritzung, da die Brennkraftmaschine in dieser Betriebsart luftgeführt betrieben wird.

Auch eine Betriebsart "Schicht/Katheizen" ist möglich. In dieser Betriebsart wird der Katalysator 42 auf die für ein korrektes Funktionieren erforderliche Betriebstemperatur gebracht. Hierzu wird nach erfolgter Zündung 74 eine Schichteinspritzung 76 ausgelöst, welche gleichzeitig mit der Berechnung 68 der Kraftstoffmenge für die Schichteinspritzung 72 im Punkt 78 berechnet wird.

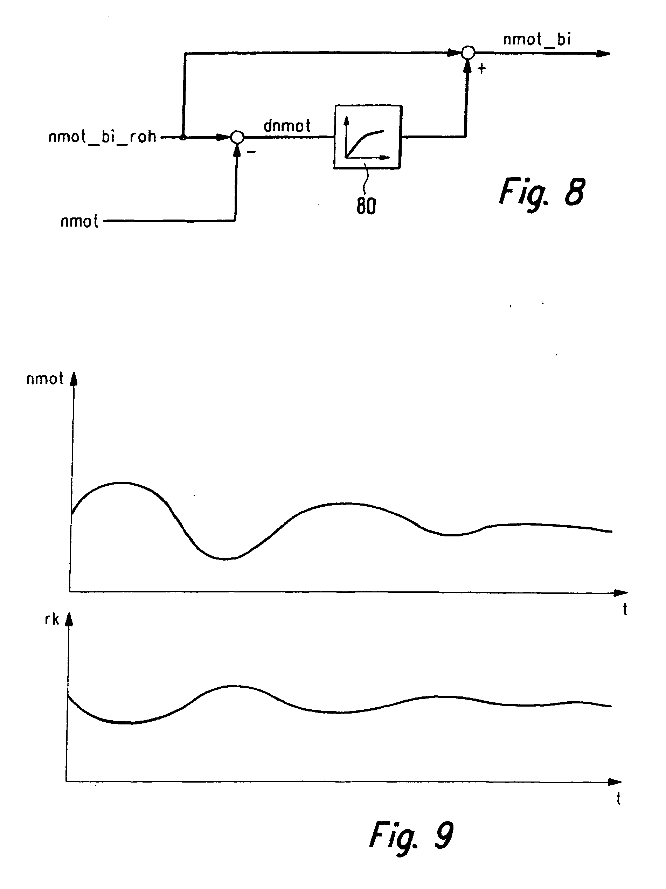

Die Einführung eines eigenen, zweiten, zum Drehwinkel der Kurbelwelle 20 synchronen Verarbeitungsrasters SYNCHRO2 für die Schichteinspritzung 68 bis 72 hat insbesondere Vorteile bei der Drehzahl-Konstanthaltung im Leerlauf der Brennkraftmaschine 10 sowie im Schichtbetrieb (Anti-Ruckelfunktion). Dadurch, dass die Berechnung 68 der Kraftstoffmenge für die Schichteinspritzung 72 sehr zeitnah zur eigentlichen Einspritzung 72 erfolgt, kann die drehmomentbestimmende Schichteinspritzung 72 der aktuellen Drehzahl der Kurbelwelle 20 sehr gut angepasst werden. Hierzu wird folgendermaßen vorgegangen (vgl. Fig. 8):

Unmittelbar vor Beginn des zweiten Verarbeitungsrasters SYNCRHO2 wird ein momentaner Drehzahlwert nmot_bi_roh bestimmt. Dieser Drehzahlwert wird dadurch bestimmt, dass die Zeit gemessen wird, welche bspw. drei Zähne des Zahnrads 22 unmittelbar vor Beginn des zweiten Verarbeitungsrasters SYNCHRO2 benötigen, um sich am induktiven Sensor 26 vorbei zu bewegen. Dieser momentane Drehzahlwert nmot_bi_roh ist somit ein "mikroskopischer" Drehzahlwert, welcher noch mit den Beschleunigungen und Abbremsungen der Kurbelwelle 20 behaftet ist, welche vor und nach einer Verbrennung in einem Zylinder 12 der Brennkraftmaschine 10 an der Kurbelwelle 20 auftreten.

Um hieraus eine bereinigte Momentandrehzahl nmot_bi zu ermitteln, welche von diesen Drehungleichförmigkeiten frei ist, wird ferner die mittlere Drehzahl nmot ermittelt, welche während eines Zeitraums einer halben Umdrehung der Kurbelwelle 20 vor Beginn des zweiten Verarbeitungsrasters SYNCHRO2 geherrscht hat. Dann wird die Differenz zwischen dem momentanen Drehzahlwert nmot_bi_roh und der mittleren Drehzahl nmot gebildet. Der Differenzwert dnmot wird einem Filter zugeführt, welcher in Fig. 8 das Bezugszeichen 80 trägt. Der hieraus hervorgehende Wert wird zu dem momentanen Drehzahlwert nmot_bi_roh addiert. Die sich nun ergebende bereinigte Momentandrehzahl nmot_bi wird dann zur Bestimmung 68 der Kraftstoffmenge der Schichteinspritzung 62 verwendet.

Um ein zu vorhandenen "makroskopischen" Schwankungen der Drehzahl nmot_bi der Kurbelwelle 20 gegenphasiges Drehmoment erzeugen zu können, welches zu einem Abklingen bzw. zu einer Unterdrückung der Drehzahlschwankungen führt, wird die bereinigte Momentandrehzahl nmot_bi mit einer während der vorhergehenden Periode ermittelten bereinigten Momentandrehzahl nmot_bi verglichen. Wie aus Fig. 9 ersichtlich ist, kann so eine Kraftstoffmenge rk bestimmt werden, deren drehmomentbestimmende Größe gegenphasig zu den Schwankungen der Drehzahl nmot ist, was zu einem Abklingen der Drehzahlschwankungen führt.

## Patentansprüche

1. Verfahren zum Betreiben einer Brennkraftmaschine (10), bei dem mindestens ein Teil des Kraftstoffs so in mindestens einen Brennraum (14) der Brennkraftmaschine (10) eingespritzt werden kann, dass er dort geschichtet vorliegt ("Schichteinspritzung"), und bei dem für den Betrieb der Brennkraftmaschine (10) erforderliche Operationen`(62-66) in einem ersten, zum Drehwinkel (vZOT) einer Kurbelwelle (20) synchronen Verarbeitungsraster (SYNCHR01) bestimmt werden, **dadurch gekennzeichnet, dass** die Kraftstoffmenge der Schichteinspritzung (72) am Anfang eines eigenen, zweiten, zum Drehwinkel (vZOT) der Kurbelwelle (20) synchronen Verarbeitungsrasters (SYNCHR02) bestimmt wird (68).

2. Verfahren nach Anspruch 1, **dadurch gekennzeichnet, dass** mindestens ein erstes Verarbeitungsraster (SYNCHRO1) im Bereich eines Drehwinkels (vZOT) der Kurbelwelle (20) von 67° bis 77° vZOT, vorzugsweise bei ungefähr 72° vZOT, beginnt, und dass das zweite Verarbeitungsraster (SYNCHR02), in dem die Kraftstoffmenge der Schichteinspritzung (72) bestimmt wird (68), im Bereich eines Drehwinkels (vZOT) der Kurbelwelle (20) von 127° bis 137° vZOT, vorzugsweise bei ungefähr 132° vZOT beginnt.

3. Verfahren nach einem der Ansprüche 1 oder 2, **dadurch gekennzeichnet, dass** ein momentaner Drehzahlwert (nmot_bi_roh) unmittelbar vor Beginn des zweiten Verarbeitungsrasters (SYNCHR02) ermittelt und für die Bestimmung (68) der Kraftstoffmenge der Schichteinspritzung (72) verwendet wird.

4. Verfahren nach Anspruch 3, **dadurch gekennzeichnet, dass** eine mittlere Drehzahl (nmot) ermittelt wird, welche während eines Zeitraums einer halben Umdrehung der Kurbelwelle (20) vor Beginn des zweiten Verarbeitungsrasters (SYNCHR02) geherrscht hat, dass die Differenz (dnmot) zwischen dem momentanen Drehzahlwert (nmot_bi_roh) und der mittleren Drehzahl (nmot) gebildet wird, dass diese Differenz (dnmot) einem Filter (80) oder einer Kennlinie zugeführt wird, dass der hieraus hervorgehende Wert zu dem momentanen Drehzahlwert (nmot_bi_roh) addiert wird, und dass die hieraus hervorgehende bereinigte Momentandrehzahl (nmot_bi) zur Bestimmung (68) der Kraftstoffmenge der Schichteinspritzung (72) verwendet wird.

5. Verfahren nach Anspruch 4, **dadurch gekennzeichnet, dass** die bereinigte Momentandrehzahl (nmot_bi) mit einer zuvor ermittelten bereinigten Momentandrehzahl (nmot_bi) verglichen und hieraus im zweiten Verarbeitungsraster (SYNCHR02) die Kraftstoffmenge der Schichteinspritzung (72) so bestimmt wird (68), dass Schwankungen der mittleren Drehzahl (nmot) unterdrückt werden.

6. Verfahren nach einem der vorhergehenden Ansprüche, **dadurch gekennzeichnet, dass** auch die Luftmenge, welche bei der Bestimmung (68) der Kraftstoffmenge der Schichteinspritzung (72) berücksichtigt wird, im zweiten Verarbeitungsraster (SYNCHR02), vorzugsweise unmittelbar vor der Berechnung (68) der Kraftstoffmenge der Schichteinspritzung (72), bestimmt wird (70).

7. Verfahren nach einem der vorhergehenden Ansprüche, **dadurch gekennzeichnet, dass** mindestens ein Teil des Kraftstoffs so in einen Brennraum (14) der Brennkraftmaschine (10) eingespritzt wird (66), dass er dort im Wesentlichen homogen vorliegt ("Homogeneinspritzung"), und die Kraftstoffmenge der Homogeneinspritzung (66) am Anfang des ersten Verarbeitungsrasters (SYNCHRO1) bestimmt wird (64).

8. Verfahren nach einem der vorhergehenden Ansprüche, **dadurch gekennzeichnet, dass** der Zeitpunkt der Zündung (74) im ersten Verarbeitungsraster (SYNCHRO1) bestimmt wird.

9. Computerprogramm, **dadurch gekennzeichnet, dass** es das Verfahren nach einem der vorhergehenden Ansprüche durchführt, wenn es auf einem Computer ausgeführt wird.

10. Computerprogramm nach Anspruch 9, **dadurch gekennzeichnet, dass** es auf einem Speicher, insbesondere auf einem Flash-Memory, abgespeichert ist.

11. Steuer- und/oder Regelgerät (56) zum Betreiben einer Brennkraftmaschine (10), **dadurch gekennzeichnet, dass** es einen Speicher umfasst, auf dem ein Computerprogramm nach einem der Ansprüche 9 oder 10 abgespeichert ist.

## Claims

1. Method for operating an internal combustion engine (10), in which method at least some of the fuel can be injected into at least one combustion chamber (14) of the internal combustion engine (10) so as to be present there in stratified form ("stratified injection"), and in which method operations (62-66) required for the operation of the internal combustion engine (10) are determined in a first processing raster (SYNCHR01) which is synchronized with the rotational angle (BITDC) of a crankshaft (20), **characterized in that** the fuel quantity of the stratified injection (72) is determined at the start of a separate second processing raster (SYNCHR02) which is synchronized with the rotational angle (BITDC) of the crankshaft (20).

2. Method according to Claim 1, **characterized in that** at least one first processing raster (SYNCHR01) starts in the range of a rotational angle (BITDC) of the crankshaft (20) of 67° to 77° BITDC, preferably at approximately 72° BITDC, and **in that** the second processing raster (SYNCHR02), in which the fuel quantity of the stratified injection (72) is determined (68), starts in the range of a rotational angle (BITDC) of the crankshaft (20) of 127° to 137° BITDC, preferably at approximately 132° BITDC.

3. Method according .to one of claims 1 or 2, **characterized in that** an instantaneous rotational speed value (nmot_ bi_roh) is determined directly before the start of the second processing raster (SYNCHR02) and is used in the determination (68) of the fuel quantity of the stratified injection (72).

4. Method according to Claim 3, **characterized in that** a mean rotational speed (nmot) is determined over a period of half a rotation of the crankshaft (20) before the start of the second processing raster (SYNCHR02), **in that** the difference (dnmot) between the instantaneous rotational speed value and (nmot_bi_roh) and the mean rotational speed (nmot) is formed, **in that** said difference (dnmot) is passed to a filter (80) or a characteristic curve, **in that** the value arising from this is added to the instantaneous rotational speed value (nmot_bi_roh), ' and **in that** the corrected instantaneous rotational speed (nmot_bi) arising from this is used in the determination (68) of the fuel quantity of the stratified injection (72).

5. Method according to Claim 4, **characterized in that** the corrected instantaneous rotational speed (nmot_bi) is compared with a previously determined corrected instantaneous rotational speed (nmot_bi), and the fuel quantity of the stratified injection (72) is determined (68) from this in the second processing raster (SYNCHR02) in such a way that fluctuations of the mean rotational speed (nmot) are suppressed.

6. Method according to one of the preceding claims, **characterized in that** the air quantity which is included in the determination (68) of the fuel quantity of the stratified injection (72) is also determined (70) in the second processing raster (SYNCHR02), preferably directly before the calculation (68) of the fuel quantity of the stratified injection (72).

7. Method according to one of the preceding claims, **characterized in that** at least some of the fuel is injected (66) into a combustion chamber (14) of the internal combustion engine (10) so as to be present there in substantially homogeneous form ("homogeneous injection"), and the fuel quantity of the homogeneous injection (66) is determined (64) at the start of the first processing raster (SYNCHRO1).

8. Method according to one of the preceding claims, **characterized in that** the time of the ignition (74) is determined in the first processing raster (SYNCHRO1).

9. Computer program, **characterized in that** it carries out the method according to one of the preceding claims when it is executed on a computer.

10. Computer program according to Claim 9, **characterized in that** it is stored on a memory, in particular on a flash memory.

11. Open-loop and/or closed-loop control unit (56) for operating an internal combustion engine (1), **characterized in that** it comprises a memory on which a computer program according to one of Claims 9 or 10 is stored.

## Revendications

1. Procédé pour faire fonctionner un moteur à combustion interne (10) selon lequel au moins une partie de carburant peut être injectée dans au moins une chambre de combustion (14) du moteur à combustion interne (10) pour y être stratifiée (« injection stratifiée »), et des opérations (62 - 66) nécessaires pour le fonctionnement du moteur à combustion interne (10) sont déterminées selon une première grille de traitement (SYNCHRO1) synchronisée avec l'angle de rotation (vZOT) d'un vilebrequin (20),
**caractérisé en ce que**
la quantité de carburant de l'injection stratifiée (72) est déterminée (68) au début d'une deuxième grille de traitement (SYNCHR02) particulière synchronisée avec l'angle de rotation (vZOT) du vilebrequin (20).

2. Procédé selon la revendication 1,
**caractérisé en ce qu'**
au moins une grille de traitement (SYNCHRO1) commence dans la zone d'un angle de rotation (vZOT) du vilebrequin (20) entre 67° et 77° vZOT, de préférence à 72° vZOT environ, et la deuxième grille de traitement (SYNCHR02), dans laquelle la quantité de carburant de l'injection stratifiée (72) est déterminée (68), commence dans la zone d'un angle de rotation (vZOT) du vilebrequin (20) entre 127° et 137° vZOT, de préférence à 132° vZOT environ.

3. Procédé selon l'une des revendications 1 ou 2,
**caractérisé en ce qu'**
on détermine une valeur de vitesse de rotation momentanée (nmot_bi_roh) immédiatement avant le début de la deuxième grille de traitement (SYNCHR02) et utilisée pour déterminer (68) la quantité de carburant de l'injection stratifiée (72).

4. Procédé selon la revendication 2,
**caractérisé en ce qu'**
on détermine une vitesse de rotation moyenne (nmot) pendant un laps de temps d'un demi-tour du vilebrequin (20) avant le début de la deuxième grille de traitement (SYNCHR02), on forme la différence (dnmot) entre la valeur de vitesse de rotation momentanée (nmot_bi_roh) et la vitesse de rotation moyenne (nmot), on transmet cette différence (dnmot) à un filtre (80) ou à une ligne caractéristique, on additionne la valeur ainsi obtenue à la valeur de vitesse de rotation momentanée (nmot_bi_roh), et la vitesse de rotation momentanée (nmot_bi) ainsi corrigée est utilisée pour déterminer (68) la quantité de carburant de l'injection stratifiée (72).

5. Procédé selon la revendication 4,
**caractérisé en ce que**
la vitesse de rotation momentanée (nmot_bi) corrigée est comparée à une vitesse de rotation momentanée (nmot_bi) corrigée déterminée préalablement pour ainsi déterminer (68), dans la deuxième grille de traitement (SYNCHR02), la quantité de carburant de l'injection stratifiée (72) de façon à contrôler les variations de la vitesse de rotation moyenne (nmot).

6. Procédé selon l'une des revendications précédentes,
**caractérisé en ce que**
la quantité d'air prise en compte pour déterminer (68) la quantité de carburant de l'injection stratifiée (72) est également déterminée (70) dans la deuxième grille de traitement (SYNCHR02), de préférence juste avant le calcul (68) de la quantité de carburant de l'injection stratifiée (72).

7. Procédé selon l'une des revendications précédentes,
**caractérisé en ce qu'**
au moins une partie du carburant est injectée (66) dans une chambre de combustion (14) du moteur à combustion interne (10) pour y être essentiellement homogène (« injection homogène »), et la quantité de carburant de l'injection homogène (66) est déterminée (64) au début de la première grille de traitement (SYNCHRO1).

8. Procédé selon l'une des revendications précédentes,
**caractérisé en ce que**
le moment de l'allumage (74) est déterminé dans la première grille de traitement (SYNCHRO1).

9. Programme informatique,
**caractérisé en ce qu'**
il exécute le procédé selon l'une des revendications précédentes s'il est réalisé sur un ordinateur.

10. Programme informatique selon la revendication 9,
**caractérisé en ce qu'**
il est stocké dans une mémoire, en particulier une mémoire flash.

11. Appareil de commande et/ ou de régulation (56) pour faire fonctionner un moteur à combustion interne (10),
**caractérisé en ce qu'**
il comprend une mémoire dans laquelle est stocké un programme informatique selon l'une des revendications 9 ou 10.
